# EUROPEAN PATENT SPECIFICATION

(11) **EP 2 347 647 B1**
(45) Date of publication and mention of the grant of the patent: **04.07.2012**
(21) Application number: 11150892.5
(22) Date of filing: 13.01.2011
(51) Int. Cl.: A01K 1/015

(54) **Device for use in a pen floor discharge of waste**
Vorrichtung zur Verwendung in einem Stallboden zur Entsorgung von Abfall
Dispositif à utiliser dans une zone de décharge des déchets

(30) Priority: 22.01.2010 NL 2004135; 15.10.2010 NL 2005533; 17.09.2010 NL 1038251
(43) Date of publication of application: 27.07.2011
(73) Proprietor: Swaans, Johannes, 5591 PW Heeze (NL)
(72) Inventor: Swaans, Johannes, 5591 PW Heeze (NL)
(74) Representative: Verhees, Godefridus Josephus Maria

(56) References cited:
- WO-A1-2006/103534

## Description

### Field of the invention

The invention relates to a slurry manure discharge apparatus for use in a floor of an animal house provided with elongated slurry manure discharge openings, the slurry manure discharge apparatus comprising two closing parts shutting off the slurry manure discharge openings in such manner that no injurious gases and fumes can be emitted from the slurry manure discharge openings and yet the slurry manure can be discharged, of which closing parts a first closing part is present against a longitudinal side of a bouding wall of the slurry manure discharge opening during operation, and the second closing part is present against an opposite longitudinal side of the bounding wall or a further bouding wall, the first closing part comprising at least one flexible flap extending in an essentially vertical direction during use, and the second closing part having an elongated profile being in contact by means of a lower longitudinal edge with the flap near the lower edge of the flap during use, the profile is rigid and, if applied to a floor of an animal house, is immobile or at any rate hardly movable and the flap is flexible and can be pushed away so that the flap gives way if during operation slurry manure drops through the slurry manure discharge slot and the profile does not move or only hardly moves at all.

### State of the art

A slurry manure discharge apparatus of this type is known from NL1013163. A floor of an animal house is to be arranged such that the least possible amount of gases can be emitted from the slurry manure cellar underneath the floor whereas, on the other hand, the slurry manure is discharged in a proper manner and the chance of the discharge openings being clogged is minimised. The profile is more rigid than the flap in such manner that the slurry manure drops through the closing parts by pushing the flaps aside and not by pushing the profile downwards or bending same. The slurry manure discharge opening is shut off by the flaps which are suspended against the edge of the profile as a result of gravity. In consequence, a proper closure is guaranteed even after a longer period of time.

### Summary of the invention

It is an object of the invention to provide a slurry manure discharge apparatus of the type defined in the opening paragraph with which is ensured that during use the closing parts press against the floor slats. For this purpose the slurry manure discharge apparatus according to the invention is characterised in that the slurry manure discharge apparatus comprises spacers which keep projecting upper sections of the closing parts positioned opposite each other apart.

In an advantageous embodiment each spacer comprises two spacer elements which are directly or indirectly connected to each other by means of spring-mounted connecting elements.

A further embodiment of the slurry manure discharge apparatus according to the invention is characterised in that at both extremities of the first and second closing parts an upper section projects beyond the lower section, so that the closing parts with the projecting upper sections can rest on supports of the floor of the animal house during use.

To ensure simple downward discharge of the slurry manure through the slurry manure discharge opening, in an embodiment of the slurry manure discharge apparatus according to the invention the first closing part not only comprises said flap, but also further flaps with the flaps being present side by side. By providing the slurry manure discharge apparatus with several small flaps in lieu of a single large flap, it is easier for the slurry manure to push away a flap and drop into the slurry manure collection cellar.

The profile of the second closing part is preferably buckled in longitudinal direction with the lower section of the profile being bent towards the flap or flaps. The lower section of the profile preferably encloses an angle between 135 and 160 degrees relative to the upper section of the profile. This avoids the slurry manure sticking to the bent section of the second closing part and the discharge opening being clogged.

An embodiment of the slurry manure discharge apparatus according to the invention is characterised in that the profile extends with its lower edge to beyond the opposite bounding wall of the slurry manure discharge slot. Consequently, the flap presses more vigorously against the edge of the profile providing an even better sealing of the slurry manure discharge opening.

Yet a further embodiment of the slurry manure discharge apparatus according to the invention is characterised in that the first closing part is present against a longitudinal side of a floor slat without being attached thereto, which floor slat bounds the slurry manure discharge opening, and the second closing part is present against a facing longitudinal side of a further floor slat without being attached thereto either, which further floor slat also bounds the slurry manure discharge opening. In this embodiment the slurry manure discharge apparatus is present between two floor slats without being attached to either. Since the slurry manure discharge opening is not connected to or around the floor slats, as is the case in prior art apparatus, but is lodged against them, the slurry manure discharge apparatus can be removed from the slurry manure discharge opening in a simple manner so as to be cleaned.

The invention likewise relates to a floor slat comprising a slurry manure discharge apparatus according to the invention, which floor slat comprises at least a single slurry manure discharge slot which extends in longitudinal direction of the floor slat, the slot extending from the top to the bottom of the slat, either of the closing parts being present against a bounding wall of the longitudinal side of the slurry manure discharge slot, and the other closing part being present against a bounding wall of an opposite longitudinal side of the slurry manure discharge slot. In this case the slurry manure discharge apparatus is accommodated in the floor slat in lieu of between two floor slats.

An embodiment of the floor slat according to the invention is characterised in that the lower sections of the longitudinal sides of the floor slat extend in an essentially vertical direction when used in a floor of an animal house and the upper sections of the floor slat project to beyond the lower sections and one of the closing parts being present against the lower section of one of the longitudinal sides and the other closing part being present against the other longitudinal side. In addition to the closing parts being present in the slurry manure discharge slot provided in the floor slat, this embodiment also has closing parts which are present between adjacent floor slats.

### Brief description of the drawing figures

The invention will be further described hereinafter in more detail with reference to embodiments of the slurry manure discharge apparatus according to the invention represented in the drawing figures, in which:
Figure 1 shows a sectional view of an embodiment of the slurry manure discharge apparatus installed in a floor of an animal house;
Figure 2 shows a perspective view of the floor of the animal house with slurry manure discharge apparatus shown in Fig. 1;
Figure 3 shows a top view of a first embodiment of the floor slat according to the invention;
Figure 4 shows a cross-sectional view of the floor slat shown in Fig. 3; and
Figure 5 shows a cross-sectional view of a second embodiment of the floor slat according to the invention.

### Detailed description of the drawing figures

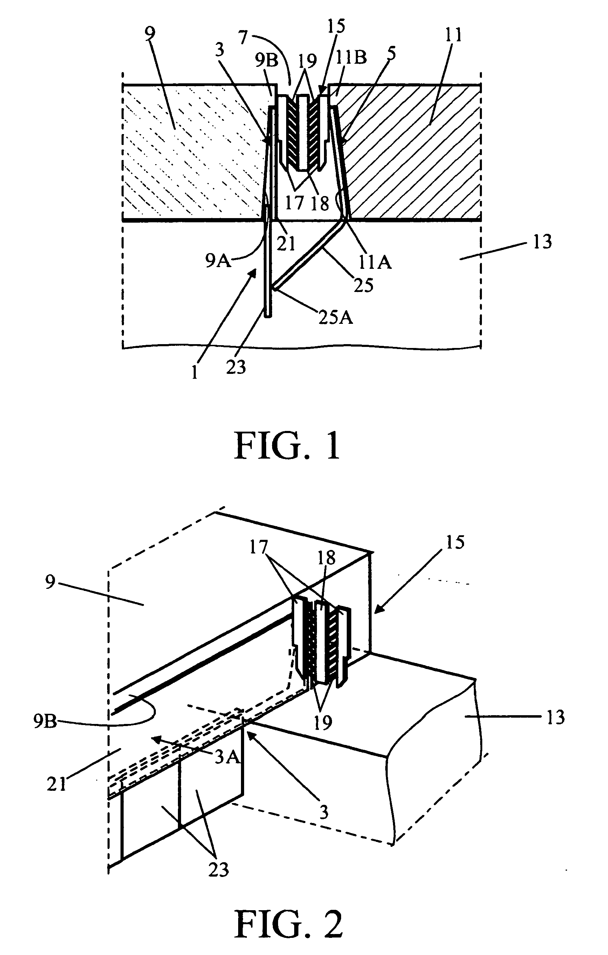

Figs 1 and 2 show a sectional view and perspective view respectively of an embodiment of the slurry manure discharge apparatus according to the invention present in a floor of an animal house. The slurry manure discharge apparatus 1 comprises two closing parts 3, 5 which shut off a slurry manure discharge opening 7. The first closing part 3 is present against a longitudinal side 9A of a floor slat 9 and the second closing part 5 is present against an opposite longitudinal side 11A of a further floor slat 11. The two closing parts 3 and 5 are not affixed to the floor slats 9 and 11 so that they can be removed from the slurry manure discharge opening 7 so as to be cleaned.

At the ends of the closing parts 3 and 5 an upper section 3A projects to beyond the lower section (see Fig. 2). With these projecting upper sections the closing parts rest on supports 13 of the floor of the animal house. Owing to its own weight the closing part 5 will hardly be pushed away or not pushed away at all by the slurry manure dropping on it through the slurry manure discharge opening.

To further reduce the chance of the second closing part 5 being pushed away by the slurry manure, the slurry manure discharge apparatus comprises spacers 15. These spacers are arranged such that they press the closing parts against the longitudinal sides of the floor slats, so that the closing parts are present in the slurry manure discharge opening in a locked up manner.

To ensure that the closing parts are present below the upper edges 9B and 11B of the floor slats, so that the slurry manure cannot end up between the closing parts and the floor slats, the slurry manure discharge apparatus comprises spacers 15. These spacers each have two strip-like spacer elements 17 which are connected to an also strip-like centre element 18 by means of spring-mounted connecting elements 19. The spacer elements 17 push the closing parts 3 and 5 against the longitudinal sides 9A and 11A of the slurry manure discharge opening 7.

The first closing part 3 is formed by a plate 21 with attached thereto a plurality of suspended flexible flaps 23. The second closing part 5 is formed by an elongated lengthways buckled plate-shaped profile 25. The lower section of the profile is bent towards the flaps and with a lower longitudinal edge 25A it is in contact with the flaps 23. In addition, the profile is restrained by the spacers as a reesult of which it cannot be turned or pushed away by the slurry manure. The slurry manure can only drop into the slurry manure cellar located underneath by pushing the flap sideways and not by pushing the profile downwards or bending it away.

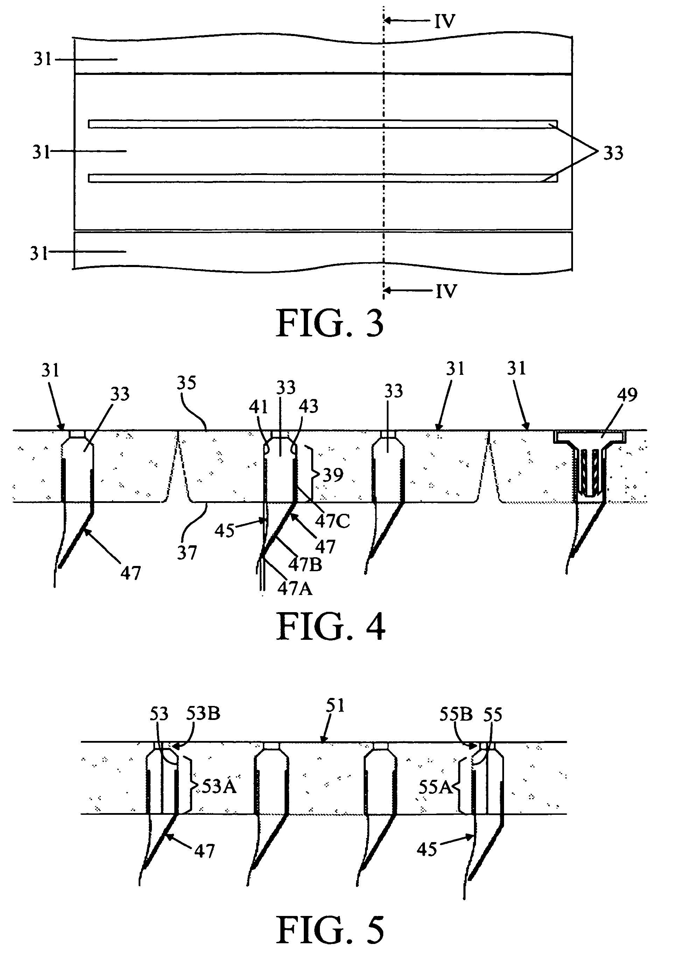

Figs. 3 and 4 show a top view and cross-sectional view respectively of three floor slats according to a first embodiment lying side by side. The floor slat 31 comprises two slurry manure discharge slots 33 extending in longitudinal direction of the floor slat. The sections of the floor slat between and on the left and right of the slurry manure discharge slots are 160 to 300 mm wide. The slots extend from the top 35 to the bottom 37 and are narrower at the top than at the bottom. The lower sections 39 of the bounding walls 41 and 43 of the longitudinal sides of the slurry manure discharge slots 33 extend in vertical direction.

Closing parts 45 and 47 are present against the bounding walls 41 and 43 of the longitudinal sides of the slurry manure discharge slots 33, shutting off the slurry manure discharge slots in such manner that no injurious gases and fumes can escape through the slurry manure discharge slots and yet the slurry manure can be discharged. From these closing parts a first closing part 45 is present against the bounding wall 41 and the second closing part 47 is present against the opposite bounding wall 43. The first closing part is formed by a flexible flap 45 extending downwards. The second closing part is formed by an elongated plate-shaped profile 47 which, during use, with a lower longitudinal edge 47A, is in contact with the flap 45.

The profile 47 is buckled in longitudinal direction with the lower section 47B of the profile being bent towards the flap 45 and enclosing a 150 degree angle to the upper section 47C of the profile. The lower edge 47A of the profile 47 extends to beyond the opposite bounding wall 43 of the slurry manure discharge slot 33.

The buckle in the profile 47 may be located at the bottom 37, as is shown in the centre and right-hand floor slat 31, or at a distance beyond the bottom 37, as is shown in the left-hand floor slat 31.

The floor slats 31 have spacers 49 of which the one in the right-hand floor slat 31 is shown. This spacer 49 too is formed by two strip-like spacer elements which are interconnected by means of spring-mounted connecting elements having a T-shaped centre portion in this case so as to push the closing parts 45 and 47 against the bounding walls 41 and 43 and keep these closing parts apart.

Figure 5 shows a cross-sectional view of a second embodiment of the floor slat according to the invention. All parts similar to those of the first embodiment are referred to here by like reference numerals. The lower sections 53A and 55A of the longitudinal sides 53 and 55 of the floor slats 51 extend in vertical direction and the upper sections 53B and 55B of the longitudinal sides extend to beyond the lower sections. The closing part 47 is present against the lower section 53A of the longitudinal side 53 and the other closing part 45 is present against the lower section 55A of the other longitudinal side 55.

Albeit the invention has been elucidated in the foregoing with reference to the drawing figures, it should be set out that the invention is not by any manner or means restricted to the embodiments shown in the drawing figures. The invention also extends to any embodiments deviating from the embodiments shown in the drawing figures within the spirit and scope defined by the claims.

## Claims

1. A slurry manure discharge apparatus for use in a floor of an animal house provided with elongated slurry manure discharge openings, the slurry manure discharge apparatus comprising two closing parts shutting off the slurry manure discharge openings in such manner that no injurious gases and fumes can be emitted from the slurry manure discharge openings and yet the slurry manure can be discharged, of which closing parts a first closing part is present against a longitudinal side of a bouding wall of the slurry manure discharge opening during operation, and the second closing part is present against an opposite longitudinal side of the bounding wall or a further bouding wall, the first closing part comprising at least one flexible flap extending in an essentially vertical direction during use, and the second closing part having an elongated profile being in contact by means of a lower longitudinal edge with the flap near the lower edge of the flap during use, the profile is rigid and, if applied to a floor of an animal house, is immobile or at any rate hardly movable and the flap is flexible and can be pushed away so that the flap gives way if during operation slurry manure drops through the slurry manure discharge slot and the profile does not move or only hardly moves at all, **characterised in that** the slurry manure discharge apparatus comprises spacers which keep projecting upper sections of the closing parts positioned opposite each other apart.

2. A slurry manure discharge apparatus as claimed in claim 1, **characterised in that** each spacer comprises two spacer elements which are directly or indirectly connected to each other by means of spring-mounted connecting elements.

3. A slurry manure discharge apparatus as claimed in claim 1 or 2, **characterised in that** at both extremities of the first and second closing parts an upper section projects beyond the lower section, so that the closing parts with the projecting upper sections can rest on supports of the floor of the animal house during use.

4. A slurry manure discharge apparatus as claimed in any one of the preceding claims, **characterised in that** the first closing part not only comprises said flap, but also further flaps with the flaps being present side by side.

5. A slurry manure discharge apparatus as claimed in any one of the preceding claims, **characterised in that** the profile of the second closing part is plate-shaped and buckled in longitudinal direction with the lower section of the profile being bent towards the flap or flaps.

6. A slurry manure discharge apparatus as claimed in any one of the preceding claims, **characterised in that** the profile extends with its lower edge to beyond the opposite bounding wall of the slurry manure discharge slot.

7. A slurry manure discharge apparatus as claimed in any one of the preceding claims, **characterised in that** the first closing part is present against a longitudinal side of a floor slat without being attached thereto, which floor slat bounds the slurry manure discharge opening, and the second closing part is present against an opposite longitudinal side of a further floor slat without being attached thereto either, which further floor slat also bounds the slurry manure discharge opening.

8. A floor slat comprising a slurry manure discharge apparatus as claimed in any one of the preceding claims, which floor slat comprises at least a single slurry manure discharge slot which extends in longitudinal direction of the floor slat, the slot extending from the top to the bottom of the slat, either of the closing parts being present against a bounding wall of the longitudinal side of the slurry manure discharge slot, and the other closing part being present against a bounding wall of an opposite longitudinal side of the slurry manure discharge slot.

9. A floor slat as claimed in claim 8, **characterised in that** the lower sections of the longitudinal sides of the floor slat extend in an essentially vertical direction when used in a floor of an animal house and the upper sections of the floor slat project to beyond the lower sections and one of the closing parts being present against the lower section of one of the longitudinal sides and the other closing part being present against the other longitudinal side.

## Patentansprüche

1. Entmistungseinrichtung für die Anwendung in einem Stallboden, versehen mit langgereckten Entmistungsöffnungen, wobei die Entmistungseinrichtung zwei Verschlussteile umfasst, die die Entmistungsöffnung derart verschließen, dass keine Dämpfe über die Entmistungsöffnungen entweichen können und der Mist dennoch abgeführt werden kann, von denen ein erstes Verschlussteil während des Einsatzes gegen eine Längsseite einer Begrenzungswand der Entmistungsöffnung vorhanden ist, und das zweite Verschlussteil gegen eine gegenüberliegende Längsseite der Begrenzungswand oder einer weiteren Begrenzungswand vorhanden ist, wobei das erste Verschlussteil mit mindestens einer flexiblen Klappe versehen ist, die sich während des Einsatzes hauptsächlich in vertikaler Richtung erstreckt, und das zweite Verschlussteil mit einem langgereckten Profil versehen ist, das während des Einsatzes mit einem untersten Längsrand in unmittelbarer Nähe des unteren Randes der Klappe mit der Klappe in Kontakt ist, das Profil fest und bei der Anwendung in einem Stallboden unbeweglich oder zumindest kaum beweglich ist und die Klappe in der Weise flexibel und wegdrückbar ist, dass sich die Klappe wegbiegt und sich das Profil nicht oder kaum biegt oder bewegt, wenn während des Einsatzes Mist durch die Entmistungsöffnung fällt, dass die Entmistungseinrichtung Distanzstücke umfasst, die die gegenüber einander liegenden hinausragenden obersten Teile der Verschlussteile auf Distanz voneinander halten.

2. Entmistungseinrichtung nach Anspruch 1, **dadurch gekennzeichnet, dass** jedes Distanzstück zwei Andrückteile umfasst, die über federnde Verbindungselemente direkt oder indirekt miteinander verbunden sind.

3. Entmistungseinrichtung nach Anspruch 1 oder 2, **dadurch gekennzeichnet, dass** an den beiden Enden des ersten und zweiten Verschlussteils ein oberster Teil über den untersten Teil hinausragt, sodass die Verschlussteile mit den hinausragenden obersten Teilen während des Einsatzes auf Stützen des Stallbodens ruhen können.

4. Entmistungseinrichtung nach einem der oben stehenden Ansprüche, **dadurch gekennzeichnet, dass** das erste Verschlussteil neben der genannten Klappe zudem weitere Klappen umfasst, wobei die Klappen nebeneinander anwesend sind.

5. Entmistungseinrichtung nach einem der oben stehenden Ansprüche, **dadurch gekennzeichnet, dass** das Profil des zweiten Verschlussteils plattenförmig und über die gesamte Länge abgeknickt ist, wobei der unterste Teil des Profils in Richtung der Klappe bzw. der Klappen gebogen ist.

6. Entmistungseinrichtung nach einem der oben stehenden Ansprüche, **dadurch gekennzeichnet, dass** sich das Profil mit dem untersten Rand bis hinter der gegenüberliegenden Begrenzungswand der Entmistungsöffnung erstreckt.

7. Entmistungseinrichtung nach einer der oben stehenden Ansprüche, **dadurch gekennzeichnet, dass** das erste Verschlussteil gegen eine Längsseite einer Bodenplatte, welche die Entmistungsöffnung begrenzt, verläuft, ohne daran befestigt zu sein, und das zweite Verschlussteil gegen eine gegenüberliegende Längsseite einer weiteren Bodenplatte, welche die Entmistungsöffnung begrenzt, verläuft, auch ohne daran befestigt zu sein.

8. Bodenplatte versehen mit einer Entmistungseinrichtung nach einem der oben stehenden Ansprüche, die zumindest mit einer Entmistungsöffnung versehen ist, die in Längsrichtung der Bodenplatte verläuft, wobei sich die Öffnung von der Oberbis zur Unterseite erstreckt und wobei eines der Verschlussteile gegen eine Begrenzungswand der Längsseite der Entmistungsöffnung und das andere Verschlussteil gegen eine Begrenzungswand einer gegenüberliegenden Längsseite der Entmistungsöffnung anwesend ist.

9. Bodenplatte nach Anspruch 8, **dadurch gekennzeichnet, dass** sich die untersten Teile der Längsseiten der Bodenplatte bei der Anwendung in einem Stallboden in einer hauptsächlich vertikalen Richtung erstrecken und die obersten Teile der Bodenplatte über die untersten Teile hinausragen und dass gegen den untersten Teil einer der Längsseiten eines der Verschlussteile und gegen die andere Längsseite das andere Verschlussteil anwesend ist.

## Revendications

1. Dispositif d'évacuation du fumier pour l'utilisation dans un plancher d'étable, pourvu d'ouvertures d'évacuation du fumier allongées, où le dispositif d'évacuation du fumier comprend deux éléments de fermeture qui ferment l'ouverture d'évacuation du fumier de telle sorte qu'aucunes vapeurs ne puissent s'échapper par les ouvertures d'évacuation du fumier tout en permettant l'évacuation du fumier, lesquels éléments de fermeture ont un premier élément de fermeture étant, pendant le fonctionnement, contre un côté longitudinal d'une paroi limite de l'ouverture d'évacuation du fumier, et le deuxième élément de fermeture étant contre un côté longitudinal, se trouvant en face, de la paroi limite ou d'une autre paroi limite, où le premier élément de fermeture est pourvu d'au moins un rabat flexible s'étendant pendant le fonctionnement dans une direction en grande partie verticale, et le deuxième élément de fermeture est pourvu d'un profil allongé qui par son bord longitudinal inférieur est en contact, pendant le fonctionnement, avec le rabat, la zone de contact étant non loin du bord inférieur du rabat, le profil est rigide et, à condition d'être utilisé dans un plancher d'étable, inamovible ou tout au moins à peine mobile et en ce que le rabat est flexible et peut être repoussé, de telle sorte que le rabat dévie dans le cas où, pendant le fonctionnement, du fumier tombe par la fente d'évacuation du fumier et le profil ne plie ni ne bouge, ou alors à peine, **caractérisé en ce que** le dispositif d'évacuation du fumier comprend des taquets qui maintiennent, à distance les unes des autres, les avancées supérieures des éléments de fermeture, lesquelles avancées se trouvent en vis-à-vis.

2. Dispositif d'évacuation du fumier selon la revendication 1, **caractérisé en ce que** chaque taquet comprend deux éléments de serrage reliés ensemble de façon directe ou indirecte par l'intermédiaire d'éléments de raccord élastiques.

3. Dispositif d'évacuation du fumier selon selon la revendication 1 ou 2, **caractérisé en ce qu'**aux deux extrémités du premier et du deuxième élément de fermeture, une partie supérieure avance au delà de la partie inférieure, de telle sorte que les éléments de fermeture et leurs avancées supérieures puissent pendant le fonctionnement reposer sur des supports du plancher de l'étable.

4. Dispositif d'évacuation du fumier selon une des revendications précédentes, **caractérisé en ce que** le premier élément de fermeture comprend, outre le rabat mentionné, d'autres rabats, les autres rabats se trouvant côte à côte.

5. Dispositif d'évacuation du fumier selon une des revendications précédentes, **caractérisé en ce que** le profil du deuxième élément de fermeture est en forme de plaque et est coudé sur sa longueur, où la partie inférieure du profil s'incurve en direction du rabat ou des rabats.

6. Dispositif d'évacuation du fumier selon une des revendications précédentes, **caractérisé en ce que** le profil et son bord inférieur s'étend jusqu'au delà de la paroi limite, se trouvant en face, de la fente d'évacuation du fumier.

7. Dispositif d'évacuation du fumier selon une des revendications précédentes, **caractérisé en ce que** le premier élément de fermeture se trouve, sans y être fixé, contre un côté longitudinal d'un panneau de plancher limitant l'ouverture d'évacuation du fumier, et **en ce que** le deuxième élément de fermeture se trouve, sans y être fixé non plus, contre un côté longitudinal d'un autre panneau de plancher limitant l'ouverture d'évacuation du fumier, ce dernier côté longitudinal se trouvant en vis-à-vis.

8. Panneau de plancher pourvu d'un dispositif d'évacuation du fumier selon une des revendications précédentes, lequel panneau de plancher est pourvu d'au moins une fente d'évacuation du fumier s'allongeant dans le sens longitudinal du panneau de plancher, laquelle fente s'étend depuis le côté supérieur jusqu'au côté inférieur, où un des éléments de fermeture se trouve contre une paroi limite du côté longitudinal de la fente d'évacuation du fumier, et l'autre élément de fermeture se trouve contre une paroi limite d'un côté longitudinal, se trouvant en face, de la fente d'évacuation du fumier.

9. Panneau de plancher selon la revendication 8, **caractérisé en ce que**, en cas d'utilisation dans un plancher d'étable, les parties inférieures des côtés longitudinaux du panneau de plancher s'étendent dans une direction en grande partie verticale et les parties supérieures du panneau de plancher dépassent des parties inférieures, et **en ce que** contre la partie inférieure de l'un des côtés longitudinaux se trouve un des éléments de fermeture et contre la partie inférieure de l'autre côté longitudinal se trouve l'autre élément de fermeture.
